# EUROPEAN PATENT SPECIFICATION

(11) **EP 2 621 048 B1**
(45) Date of publication and mention of the grant of the patent: **04.11.2015**
(21) Application number: 12382030.0
(22) Date of filing: 27.01.2012
(51) Int. Cl.: H02J 3/44, H02J 3/38

(54) **Device and method for the disconnection and subsequent reconnection of an inverter to/from an electrical network**
Vorrichtung und Verfahren zur Trennung und anschließenden Wiederverbindung eines Wechselrichters von/an ein elektrisches Netzwerk
Dispositif et procédé pour la déconnexion et futur rétablissement de l'électricité d'un inverseur vers/à partir d'un réseau électrique

(43) Date of publication of application: 31.07.2013
(73) Proprietor: Circutor, S.A., 08232 Viladecavalls (ES)
(72) Inventor: Carreras Margalef, Ramon, 08232 Viladecavalls (ES); Galvez Moreno, Eduardo, 08232 Viladecavalls (ES); Heredero Peris, Daniel, 08028 Barcelona (ES); Gross, Gabriel Igor, 08028 Barcelona (ES); Montesinos Miracle, Daniel, 08028 Barcelona (ES); Pages Gimenez, Marc, 08028 Barcelona (ES); Torne Pibernat, Marti, 08232 Viladevalls (ES)
(74) Representative: Sugrañes Patentes y Marcas

(56) References cited:
- HERONG GU ET AL: "Research on Control Method of Double-Mode Inverter with Grid-Connection and Stand-Alone", CONFERENCE PROCEEDINGS. IPEMC 2006. CES/IEEE 5TH INTERNATIONAL POWER ELECTRONICS AND MOTION CONTROL CONFERENCE 14-16 AUG. 2006 SHANGHAI, CHINA, IEEE, CONFERENCE PROCEEDINGS. IPEMC 2006. CES/IEEE 5TH INTERNATIONAL POWER ELECTRONICS AND MOTION CONTROL, 14 August 2006 (2006-08-14), pages 1-5, XP031421257, ISBN: 978-1-4244-0448-3
- MD NAYEEM ARAFAT ET AL: "Transition control strategy between standalone and grid connected operation of voltage source inverters", ENERGY CONVERSION CONGRESS AND EXPOSITION (ECCE), 2011 IEEE, IEEE, 17 September 2011 (2011-09-17), pages 1994-2000, XP032067425, DOI: 10.1109/ECCE.2011.6064031 ISBN: 978-1-4577-0542-7
- ZHILEI YAO ET AL: "Seamless Transfer of Single-Phase Grid-Interactive Inverters Between Grid-Connected and Stand-Alone Modes", IEEE TRANSACTIONS ON POWER ELECTRONICS, IEEE SERVICE CENTER, PISCATAWAY, NJ, US, vol. 25, no. 6, 1 June 2010 (2010-06-01), pages 1597-1603, XP011299102, ISSN: 0885-8993
- QIN LEI ET AL: "Multi-loop control algorithms for seamless transition of grid-connected inverter", APPLIED POWER ELECTRONICS CONFERENCE AND EXPOSITION (APEC), 2010 TWENTY-FIFTH ANNUAL IEEE, IEEE, PISCATAWAY, NJ, USA, 21 February 2010 (2010-02-21), pages 844-848, XP031649769, ISBN: 978-1-4244-4782-4

## Description

### Technical Field of the Invention

The present invention relates to a device and method for the disconnection and subsequent reconnection of an inverter to/from an electrical network, changing the operating mode of the inverter to work as a voltage source (VSC) or as a current source (CSC).

### Background of the Invention

Currently most inverters, such as photovoltaic inverters, connected to photovoltaic energy sources and to electrical networks work as current sources to thus inject the maximum power obtained from the photovoltaic energy sources into the network. The parameters for the photovoltaic inverters to obtain the maximum power from the photovoltaic energy sources are obtained in a known manner from known algorithms such as MPPT.

It is common for photovoltaic inverters to power local loads, such that part of the power generated by the photovoltaic inverter is used for powering said loads, whereas the rest is injected into the electrical network.

When the electrical network malfunctions or breaks down due to some external reason, the inverters must be disconnected at a certain time, and the system energization is ceased, preventing the creation of an islanding which could harm the local loads and other loads of the network, in addition to possibly entailing a risk for maintenance operators and for other facilities connected to the islanding.

However, upon ceasing system energization, the loads stop being powered, which could be detrimental if said loads correspond to critical loads.

Inverters are known which operate as voltage sources upon detecting an electrical network failure and disconnecting from said electrical network, although said inverters generate micro cutoffs which may be detrimental if the powered local loads are critical. One example of such inverters is described in HERONG GU ET AL: "Research on Control Method of Double-Mode Inverter with Grid-Connection and Stand-Alone", IPEMC 2006, SHANGHAI, CHINA, IEEE, CONFERENCE PROCEEDINGS, 14 August 2006, pages 1-5, XP031421257.

Therefore an object of the present invention is to disclose a method for disconnecting and reconnecting an inverter to/from an electrical network, an inverter and a system preventing local loads from receiving power supply cutoff when a breakdown is detected in the electrical network, by reliably detecting in advance that the inverter voltage can be outside the normal predetermined ranges.

### Description of the Invention

The method for disconnecting and reconnecting an inverter, initially connected to the electrical network and working as a current source, of the present invention is of the type comprising the steps of continuously monitoring the instant voltage and frequency of the electrical network until detecting that one of said parameters is outside normal predetermined ranges (step A); disconnecting the inverter from the electrical network and maintaining the inverter voltage at the nominal voltage and frequency of the electrical network (step C); continuously monitoring the instantaneous voltage and frequency of the network until detecting that their parameters are within said normal predetermined ranges (step D); and reconnecting the inverter to the electrical network after having been verified that the breakdown has been repaired (step E).

The method further comprises a step B between steps A and C for switching the inverter so that it works as a voltage source before disconnecting it from the electrical network, setting the inverter voltage at the nominal voltage and frequency of the electrical network; fixing during step C the inverter output angle according to an internal clock of frequency equal to the nominal frequency of the electrical network, the loads connected to the inverter which also form part of the electrical system which is isolated from the electrical network are thus prevented from experiencing a power supply cutoff upon disconnecting the inverter from the electrical network, the voltage values being maintained within the upper and lower limits of the ITI (CBEMA) curve. Therefore, said loads will be powered in an uninterrupted manner, being necessary when said loads correspond to critical elements the power supply of which must be uninterrupted.

The method is essentially characterized in that, during step A detecting that the instantaneous voltage of the electrical network is outside normal predetermined ranges, is performed by means of detecting the crossing of the inverter voltage, at the nominal frequency, with two sine waves in phase with the inverter the voltage of which is the nominal voltage and comprise direct components, which are positive and negative, respectively, equal to the tolerance range limits. It is thus detected in advance that the inverter voltage can be outside the normal predetermined ranges by means of using said envelopes. In one embodiment variant, said tolerance ranges are between 15% and 25% of the nominal peak voltage of the electrical network, which allows foreseeing that the inverter voltage will be outside the normal predetermined ranges, more specifically in one variant of interest being 20% of the nominal peak voltage of the electrical network, i.e., 0.2*Ug_nom*sqrt(2) and -0.2*Ug_nom*sqrt(2) respectively, which while at the same time preventing false positives due to small fluctuations allows a fast detection of the network failure. Tolerance of very isolated crossings between the inverter voltage and the sine waves, which can be due to errors made when sampling and quantifying the devices which digitally perform said comparison, is naturally envisaged to prevent false positives.

In one embodiment variant, step B comprises the sub-steps of determining, during a first pre-established time, whether the voltage of the electrical network is above or below a predetermined threshold, setting the inverter voltage at the nominal voltage and frequency of the electrical network (step B1), and after said step B1; during a second pre-established time, if it has been determined during the previous step B1 that the voltage of the electrical network was below the predetermined threshold, setting the inverter voltage at the voltage of the electrical network and, otherwise, maintaining the inverter voltage at the nominal voltage and frequency of the electrical network during said second pre-established time. The inverter current is thus prevented from creating high voltages which could cause a breakdown in local loads after loading the inductances through which said current flows and disconnecting the inverter from the electrical network when the electrical network breakdown is due to a short circuit and, therefore, the voltage of the electrical network surrounding the inverter is low due to the short circuit.

According to another aspect of the invention, in going from step A to step B and in going from step B to step C the inverter voltage is maintained within the no interruption region of the ITI curve, the method being suitable for powering loads in an uninterrupted manner during disconnection, i.e., the voltage fluctuations can be tolerated by the loads which they power.

According to another embodiment variant, step D further comprises the following sub-steps: keeping the inverter working as a voltage source at the nominal voltage and the inverter output angle according to the internal clock until detecting that the voltage and frequency of the electrical network are within the normal predetermined ranges (step D1) and progressively synchronizing the inverter output angle with the electrical network angle (step D2). It is thus achieved that the local loads do not experience a power supply cutoff upon reconnecting the inverter to the electrical network, the voltage values being maintained within the upper and lower limits of the ITI (CBEMA) curve. Therefore, said loads will be powered in an uninterrupted manner also during reconnection.

In another variant, if during step D2 the voltage and frequency of the electrical network are not maintained within the normal predetermined ranges at least for a predetermined waiting time, step D1 is repeated, preventing synchronizing with and subsequent reconnecting to the network if it is still not stable. The predetermined waiting time must be 3 minutes according to the IEC 61727 standard, 2nd edition, 2004-12.

According to another aspect of the invention, in going from step D1 to step D2 and in going from step D2 to step E the inverter voltage is maintained within the no interruption region of the ITI curve, the method being suitable for powering loads in an uninterrupted manner during reconnection, i.e., the voltage fluctuations can be tolerated by the loads which they power.

In another variant of interest, step E includes a closing time during which the progressive synchronization of the inverter output angle with the electrical network angle is maintained, allowing the inverter output angle to coincide with the network angle upon closing the switch.

In another variant of interest, the method further comprises a step F, after step E, in which detecting that the voltage and frequency of the electrical network are outside the normal predetermined ranges is disabled during a delay time, in one variant the duration of the delay time being 20 ms.

In another variant, the progressive synchronization of the inverter output angle with the electrical network angle is performed by means of a PI controller saturated at 0.1 Hz so that the inverter voltage values are maintained within the no interruption region of the ITI (CBEMA) curve.

In another variant, during step B1 the effective value of the voltage of the electrical network is compared in single-phase with 85% of the effective value of the nominal voltage, and the network direct voltage from which the negative component has been eliminated at twice the nominal frequency of the network and low-pass filtered is compared in three-phase with 85% of the nominal network direct voltage, which allows determining whether the electrical network breakdown is due to a disconnection from the network or due to a dip or short circuit.

In another embodiment variant, the inverter is a photovoltaic inverter connected to a photovoltaic power source, such as solar panels.

The inverter of the present invention is of the type suitable for being connected to a direct power source and to an alternating electrical network with a predetermined nominal voltage and frequency. Said inverter comprises a controller with means for switching said inverter for its operation as a current source or as a voltage source, and means for detecting whether the instantaneous voltage and frequency of the electrical network are within normal predetermined ranges. Said inverter is characterized by detecting means as defined in claim 11.

In one embodiment variant, the direct power source comprises at least one solar panel.

In another variant of the invention, the controller further comprises means for detecting the electrical network angle and means for setting the inverter output angle.

An electrical system comprising an inverter, a group of loads powered by said inverter and a switch for connecting and disconnecting said electrical system to/from the electrical network is disclosed.

In one variant, the electrical system comprises a low-pass filter between the photovoltaic inverter and the group of loads,

### Brief Description of the Drawings

Variants of the photovoltaic inverter, the electronic circuit and the method for disconnecting and reconnecting the electric circuit to/from the electrical network are illustrated by way of non-limiting example in the attached drawings. Specifically:
Figure 1 is a schematic view of an electronic circuit incorporating the photovoltaic inverter of the present invention;
Figure 2a is a single-phase embodiment of the electronic circuit of Figure 1;
Figure 2b is a three-phase embodiment of the electronic circuit of Figure 1;
Figure 3a is a diagram of the switchable operating modes of the photovoltaic inverter controller in a single-phase variant;
Figure 3b is a diagram of the switchable operating modes of the photovoltaic inverter controller in a three-phase variant;
Figure 4 is a diagram of the operating modes of the photovoltaic inverter angle synchronizer;
Figure 5a is a diagram of the criterion for determining the type of electrical network failure in a single-phase variant;
Figure 5b is a diagram of the criterion for determining the type of electrical network failure in a three-phase variant;
Figure 6 is a diagram of the method for disconnecting and reconnecting a system to/from the electrical network; and
Figure 7 shows the ITI (CBEMA) curve.

### Detailed Description of the Invention

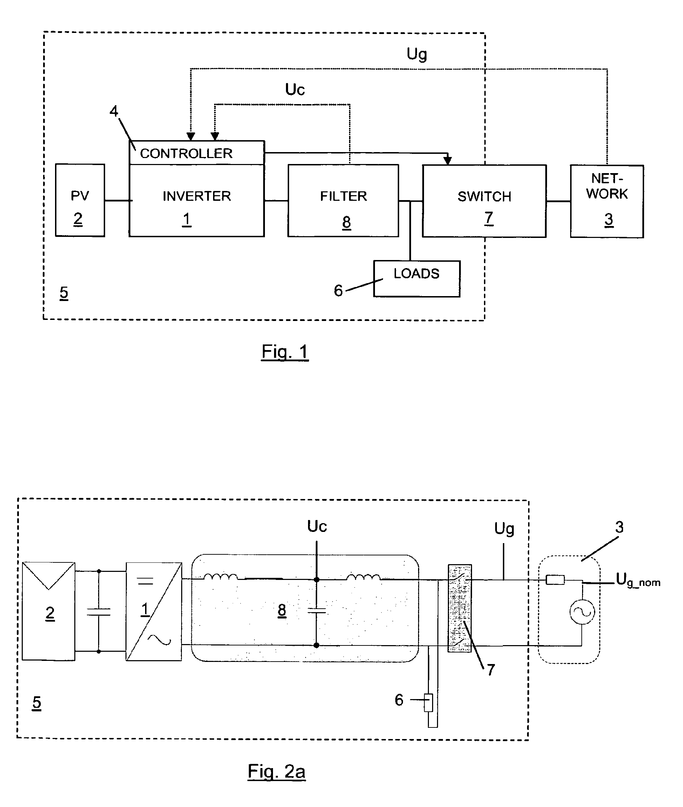

As can be observed in the diagram of Figure 1, the inverter 1 depicted is a photovoltaic inverter 1 connected to a photovoltaic power source 2, such as a solar panel assembly, and to an electrical network 3. Alternatively, the inverter 1 could be connected to other power sources such as a wind generator provided with a rectifier. The photovoltaic inverter 1 of Figure 1 is further connected to a low-pass filter 8, which allows filtering the switching frequency of the inverter 1 at high frequency, said switching frequency usually being between 4 and 20 kHz. Advantageously, the low-pass filter 8 also allows filtering other high frequency noise which may be introduced by the inverter 1. The low-pass filter 8 is in turn connected to a group of loads 6 and to a switch 7, forming an electrical system 5 connected to the electrical network 3 which can be connected to or disconnected from said electrical network 5 through the switch 7. Upon disconnecting said switch 7, the electrical system 5 is isolated from the electrical network 3 in island mode, the loads 6 being able to be powered only by the inverter 1.

The photovoltaic inverter 1 of Figure 1 comprises a controller 4 monitoring the voltage and frequency of the electrical network Ug, fg adjacent to the switch 7 as well as the voltage generated by the inverter 1. In Figure 1, to monitor the voltage generated by the inverter 1 the capacitor terminal voltage Uc of the bandpass filter 8 is monitored. Alternatively, the voltage generated by the inverter 1 could also be monitored in other points of the electrical system 5. Naturally, said voltages will be obtained in a known manner, according to whether the electric circuit 5 is for a single-phase network or for a three-phase network, as will be seen below.

Photovoltaic inverters 1 are capable of working, in a known manner, by injecting the maximum photovoltaic power with a low harmonics content into the electrical network 3. This is achieved in a known manner by means of MPPT algorithms.

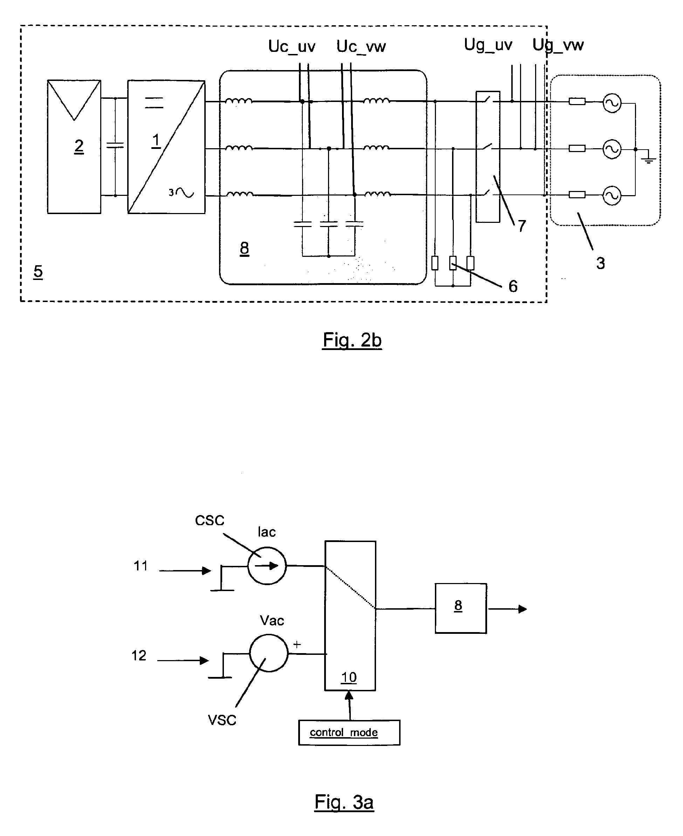

Figure 2a describes a single-phase variant of the photovoltaic inverter 1 and Figure 2b describes a three-phase variant of the photovoltaic inverter 1 in which the controller 4 is integrated in the inverter 1.

As can be observed, both the variant of Figure 2a and the variant of Figure 2b incorporate a low-pass filter 8, said low-pass filter 8 being an analog LCL filter. Said low-pass filter 8 advantageously allows eliminating the switching frequency of the inverter 1 at high frequency. Naturally, other embodiments of said low-pass filter 8 could also be used as long as they will duly attenuate the switching frequency of the inverter 1 and let the component generated by the inverter at the nominal frequency fg_nom of the electrical network 3 pass.

The inverter output intensity lac flowing through the first inductance when the inverter 1 works as a current source CSC or the inverter output voltage Vac, measured in the filter capacitor, Uc, when the inverter 1 works as a voltage source VSC could advantageously be controlled by means of using a low-pass LCL filter 8. The points described for measuring the inverter output intensity lac and the inverter output voltage Vac are advantageous points since there are no interferences from either the inverter 1 or the loads 6. Naturally, the inverter output voltage and intensity Vac, lac could be monitored in other points of the electrical system 5, taking into account the interferences and particularities of each point.

The electrical systems 5 of Figures 1, 2a and 2b allow the photovoltaic inverter 1 with low-pass filter 8 to work, at its output, as a current source CSC when said electric circuit 5 is connected to the electrical network 3 and as a voltage source VSC when electric circuit 5 is disconnected from the electrical network 3, i.e., in island mode, as will be described below.

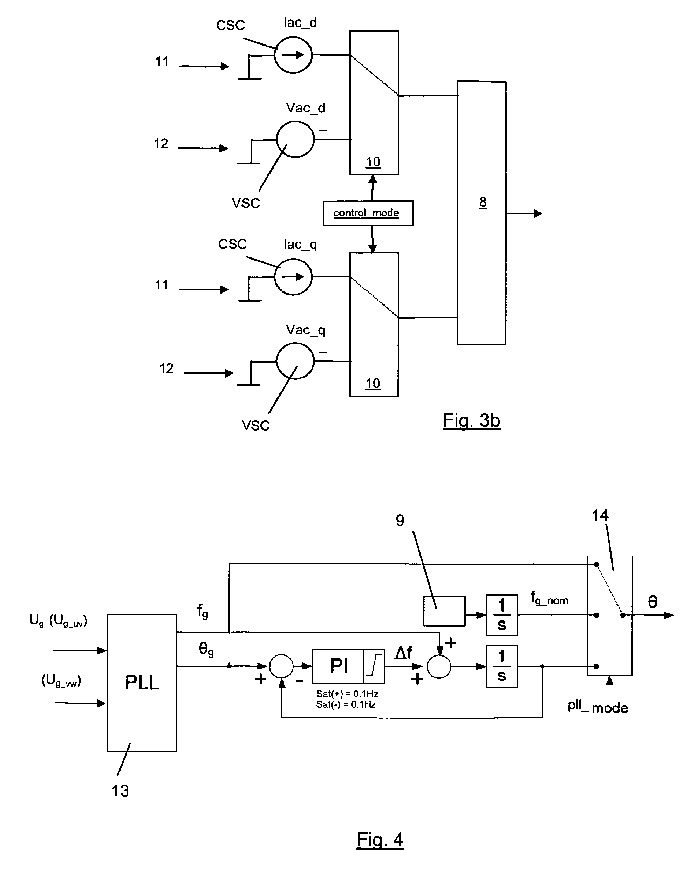

Figures 3a and 3b show the operating diagram of the inverter 1 for a single-phase variant and a three-phase variant, respectively. The operation of said inverter 1 can be seen in the single-phase variant of Figure 3a according to whether it has to work as a current source CSC, injecting an inverter output intensity lac indicated by the MPPT algorithm into the electrical network 3 in a known manner, or as a voltage source VSC, setting a determined inverter output voltage Vac. It is observed that the operating diagram in both variants is similar, the three-phase variant of Figure 3b having to consider the direct and quadrature intensity components lac_d,lac_q and the direct and quadrature voltage components Vac_d, Vac_q.

As can be observed, the inverter 1 comprises a control switch 10, controlled by a control signal control_mode which allows switching the photovoltaic inverter so that it works as a current source CSC connecting the current source branch 11 when said control signal, control_mode, is 0 at the output of the photovoltaic inverter 1. If the photovoltaic inverter has to work as a voltage source VSC, the control signal control_mode will be 1, connecting the voltage source branch 12 at the output of the photovoltaic inverter 1.

While the current source branch 11 provides the maximum available power of the photovoltaic source at the output of the photovoltaic inverter 1, the voltage source branch 12 allows establishing the output alternating voltage of the inverter 1, allowing the inverter 1 to work as a voltage source VSC.

Figure 4 shows a diagram of the means for detecting the electrical network angle θ_{g} and the means for setting the inverter output angle θ. As can be observed, the means for detecting the electrical network angle θ_{g} comprise a phase locking loop 13, commonly known as PLL, for obtaining the signal frequency and phase of the electrical network in a known manner.

The means for setting the inverter output angle θ comprise an angle switch 14, controlled by a pll signal, pll_mode, which allows, when pll_mode is 0, the inverter output angle θ, shown in the upper position in Figure 4, to coincide with the electrical network angle θ_{g}; when pll_mode is 1, shown in the intermediate position, the inverter output angle θ to be generated internally by means of an internal clock 9 the frequency of which is equal to the nominal frequency of the electrical network fg_nom, for example 50 Hz in Europe; and when pll_mode is 2, shown in the lower position, the inverter output angle θ to increase or decrease, being progressively synchronized with the electrical network angle θ_{g}.

Before disconnecting the electrical system 5 from the electrical network it is convenient to consider different types of network faults, such as short circuits, voltage dips or surges or disconnections of only one phase in the case of three-phase power supply. In the event that any line fails, it is convenient to maintain the voltage at nominal values to prevent interrupting the power supply of the loads. In a dip or short circuit, in contrast, it is essential to maintain the currents of the second inductance of the LCL filter at low levels to prevent voltage surges damaging the local loads 9 or the inverter 1 itself from occurring when opening the switch 7 joining the inverter 1 and the network 3. The purpose of the method which will be detailed resides in fault identification, adopting different strategies aimed at controlling the voltage in the alternating current capacitor, assuring the integrity of the local loads 6.

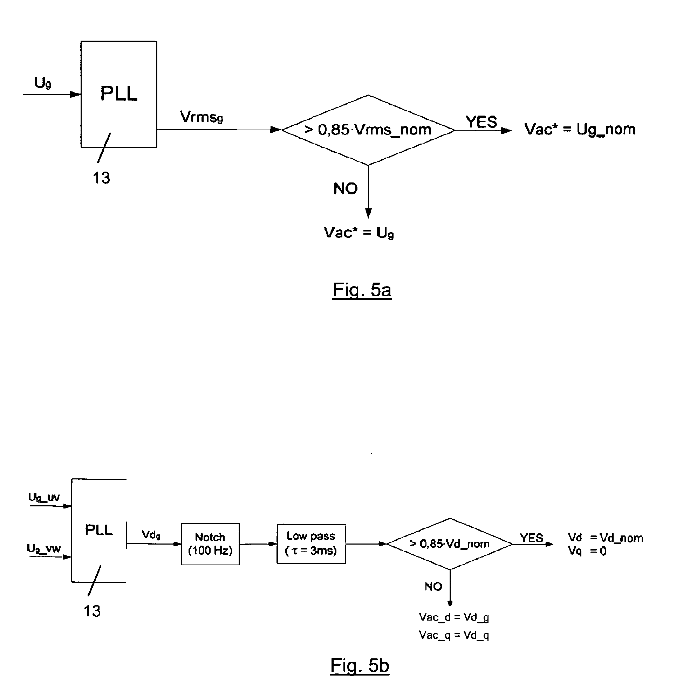

Figures 5a and 5b show a diagram of the criterion for determining the type of electrical network failure, Figure 5a showing said diagram for a single-phase variant and Figure 5b showing said diagram for a three-phase variant.

In the single-phase variant of Figure 5a, the quadratic mean of the voltage of the electrical network Vrmsg which is compared with a predetermined threshold which is 85% of the quadratic mean of the nominal voltage Ug_nom of the electrical network 3 is also obtained from the phase locking loop 13 of the controller 4.

In the three-phase variant of Figure 5b, the network direct voltage Vdg is obtained from the phase locking loop 13 of the controller 4a, from which voltage the component is eliminated at 100 Hz, i.e., at twice the nominal frequency fg_nom of the electrical network, and low-pass filtered, comparing the result with a predetermined threshold which is 85% of the nominal network direct voltage Vd_nom.

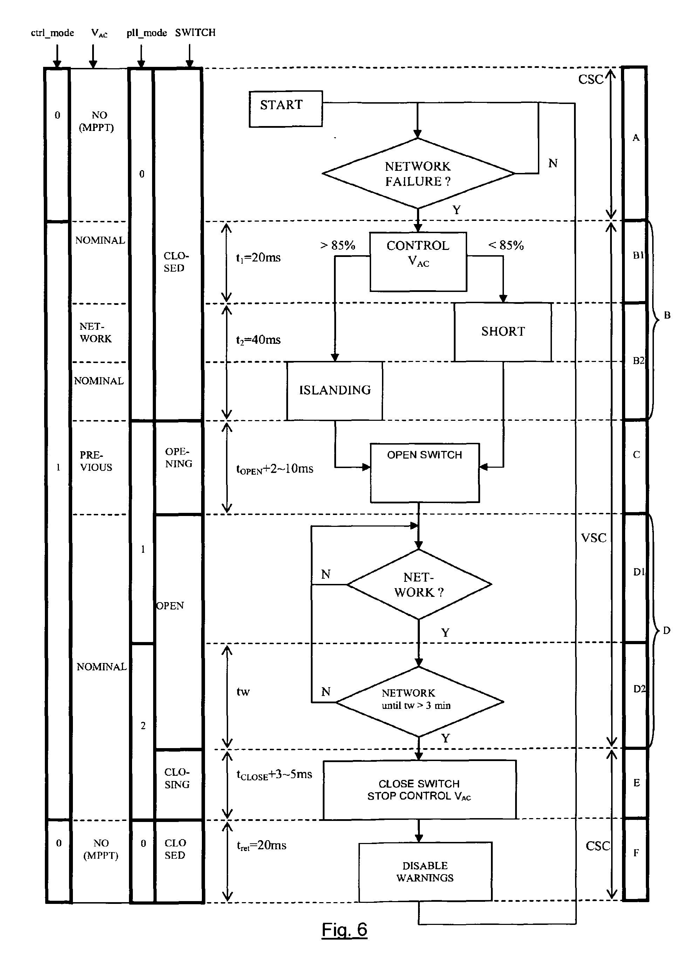

Figure 6 shows a diagram of the method for disconnecting and reconnecting the photovoltaic inverter 1 initially connected to the electrical network 3 and working as a current source CSC.

The controller 4 has to detect the fault on time, isolate the local loads 6 and convert the current source CSC to voltage source VSC by disabling the MPPT algorithm. In this process, the local loads 9 need to keep being powered. Furthermore, the inverter must be capable of re-synchronizing with the network from an islanding situation, closing the switch 7 which allows it to be reconnected with the power supply and re-execute the MPPT algorithm, as will be seen below.

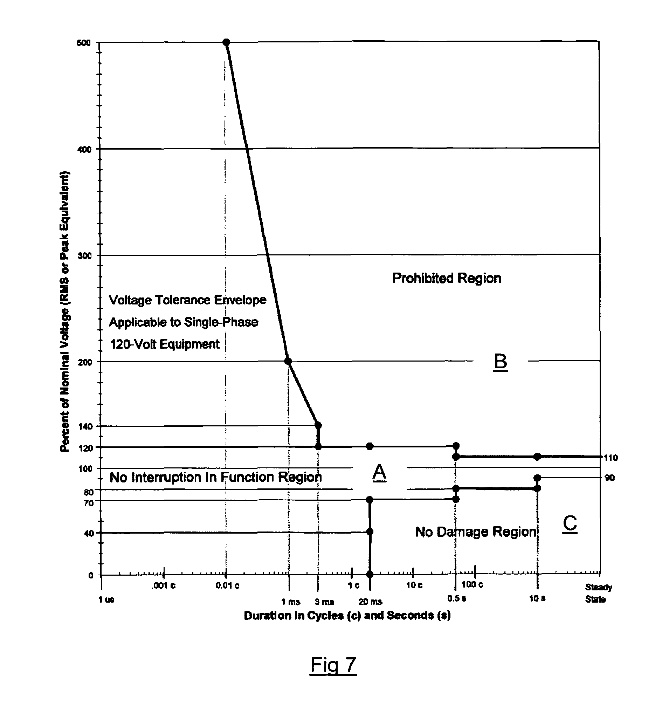

The ITI curve plotted by the ITI (Information Technology Industry Council), previously known as CBEMA (Computer & Business Equipment Manufacturer's Association) which is shown in Figure 7, describes the power supply alternating voltage variation which can typically be tolerated by information and communication technology equipment for a determined time without affecting its operation. A no interruption region A is seen in said ITI curve, in which the loads tolerate the voltage variation, a prohibited surge region B and a power supply cutoff region C.

Therefore, it is essential that during both the disconnection process and the subsequent reconnection of the electrical system 5 to the electrical network 3, the voltage of the loads is, at all times, within the no interruption region A.

The method described in Figure 6 comprises the steps of monitoring the parameters of the electrical network until detecting that one of said parameters of the electrical network is outside normal predetermined ranges, step A. Said normal predetermined ranges are understood as those comprised within the voltage and frequency tolerance of the electrical network, typically a network voltage the quadratic mean of which is between 1.1 and 0.85 times the nominal voltage of the electrical network Ug_nom and a network frequency between 49 and 50.2 Hz. However, since said detection is performed by means of comparing the quadratic mean of the inverter voltage Uc,Uc_uv,Uc_vw, it is possible that at the time of obtaining the value of said quadratic mean of the inverter voltage Uc,Uc_uv,Uc_vw, which is obtained in a known manner with a certain delay since an integral has to be made for a period of the signal, during a failure of the electrical network 3 it is quite possible that the inverter voltage Uc,Uc_uv,Uc_vw has already gone outside the normal predetermined ranges and even outside the no interruption region A of the ITI curve before the network failure is detected.

Since one of the key points for converting CSC to VSC is the islanding detection time, especially in those cases in which the connected local loads 6 have a small power ratio with respect to the nominal power of the inverter 1, the use of voltage envelopes is proposed. During normal operating mode, i.e., as a CSC, the capacitor voltages Uc,Uc_uv,Uc_vw are monitored continuously and compared with upper and lower voltage envelopes. These curves are limits generated by the controller 4 of the inverter 1 and the phase thereof is provided by the algorithm for synchronizing with the network, also known by its abbreviation PLL (Phase Loop Locked). Advantageously, it is instantaneously detected that the inverter voltage Uc,Uc_uv,Uc_vw is outside tolerance ranges by means of said envelopes during step A, foreseeing that the quadratic mean thereof will be outside the normal predetermined ranges. Said envelopes are two sine waves having a phase equal to the inverter voltage and amplitude Ug_nom, to which a direct component, which is both positive and negative, respectively, is added, which is equal to 20% of the nominal peak voltage Ug_nom, i.e., 0.2*Ug_nom*sqrt(2) and -0.2*Ug_nom*sqrt(2). Said 20% of the nominal peak voltage Ug_nom corresponds to the tolerance range. It is determined by means of said method that the parameters of the electrical network 3 are outside the tolerance ranges when any of the capacitor voltages Uc,Uc_uv,Uc_vw are above their respective upper envelope or below their respective lower envelope.

Therefore, during said step A, a NETWORK FAILURE will be detected when it is detected that the electrical network 3 is outside the normal predetermined ranges or exceeds the tolerance ranges, without distinction.

Complementarily, it can be detected that the parameters of the electrical network 3 are outside the normal predetermined ranges by means of other known active methods, such as the active islanding detecting method SFS (Sandia Frequency Shift). Said active methods further prevent the non-detection of faults due to the presence of resonant loads in the system. After detecting a failure of the electrical network 3, the conversion of the operating mode starts with a step B in which the photovoltaic inverter 1 is switched so that it works as a voltage source VSC at the nominal voltage and frequency Ug_nom,fg_nom of the electrical network, modifying the control signal control_mode of the control switch 10 from 0 to 1, the inverter 1 starting to operate as described above.

In a step B1, after the switching, it must be determined during a first pre-established time t₁ of 20 ms whether the voltage of the electrical network Ug,Ug_uv,Ug_vw is above or below the predetermined threshold described above in Figures 5a and 5b.

If it is determined in step B1 that the voltage of the electrical network 3 is below said predetermined threshold, and therefore the electrical network failure is due to a short circuit, the inverter voltage Vac must be set at the instantaneous voltage of the electrical network Ug,Ug_uv,Ug_vw during a next step B2 and to perform step C after a second pre-established time t₂ of 40 ms.

In said step C the photovoltaic inverter 1 must be disconnected from the electrical network 3 by means of the switch 7; waiting during a safe opening time of between 2 and 10 ms, after the opening time t_{OPEN} of the switch 7, for the switch 7 to disconnect the electrical system 5 comprising the photovoltaic inverter 1 of the electrical network 3.

By means of this method the inverter output voltage Vac,Vac_d,Vac_q is advantageously maintained within the no interruption region A of the ITI curve in going from step A to step B and in going from step B to step C, the inverter output voltage Vac,Vac_d,Vac_q therefore being suitable for powering loads in an uninterrupted manner during the disconnection of the photovoltaic inverter 1 from the electrical network 3, i.e., the voltage fluctuations at the output of the inverter 1 can be tolerated by the loads 6 which they power and will not experience a voltage peak which could damage the loads 6 by reaching the prohibited surge region B, or a power supply cutoff by reaching the power supply cutoff region C. As illustrated in the ITI curve of Figure 7, the inverter output voltage Vac,Vac_d,Vac_q cannot exceed 500% of the nominal voltage Ug_nom during a space of time less than 100 µs, whereas it cannot exceed 200% during a space of time from 1 ms and so on so forth.

Furthermore, during said step C, the inverter output angle θ must be set according to an internal clock 9, modifying the control signal of the angle switch 14, having a frequency equal to the nominal frequency fg_nom, of the electrical network 3.

The process of opening the switch 7 is not instantaneous and its duration depends on the current flowing through it. Furthermore, it must be considered that each phase has a zero crossing at a different point in time, whereas the inner contacts are mechanically opened in unison. For these reasons it is necessary to implement a wait step the purpose of which is to continue with the same decision made in the previous step, assuring that after a certain time the switch 7 is opened. Furthermore, the PLL is working in mode 1 in this process, such that it is generating the angle internally.

When the disconnection process ends, the reference alternating voltage is forced to the nominal network value Ug_nom so that the system starts to work as an uninterrupted power supply system, powering the loads 6.

Step D is then performed to monitor the parameters of the electrical network until detecting that they are within the normal predetermined ranges, i.e., detecting the network presence.

In said step D, a step D1 is contemplated to keep the photovoltaic inverter working as a voltage source VSC at the nominal voltage and the inverter angle 6 according to an internal clock 9 until detecting that the voltage and frequency of the electrical network are within the normal predetermined ranges and, in this case, a step D2 is then performed for progressively synchronizing the inverter angle θ with the electrical network angle θ_{g} by means of a PI controller saturated at 0.1 Hz. If during step D2 the voltage and frequency of the electrical network are not maintained within the normal predetermined ranges at least during a predetermined waiting time tw, 3 minutes being, for example, the value proposed by the IEC 61727, 2nd edition, 2004-12, step D1 is performed again.

Finally, there is a step E for reconnecting the photovoltaic inverter to the electrical network 3; said step E including a safe closing time of between 3 and 5 ms after the closing time t_{CLOSE} of the switch 7 during which the progressive synchronization of the inverter output angle θ with the electrical network angle θ_{g} is maintained. Once said safe closing time has lapsed, the control switch 10 is actuated, modifying the control signal ctrl_mode of the control switch 10 so that it returns to 0, and the control signal of the angle switch 14 is also actuated so that it returns to 0, and the MPPT is enabled. The inverter output voltage Vac,Vac_d,Vac_q is also maintained within the no interruption region A of the ITI curve shown in Figure 7 in going from step D1 to step D2, in going from step D2 to step E by means of this method, the inverter output voltage Vac,Vac_d,Vac_q therefore being suitable for powering the loads in an uninterrupted manner during the reconnection of the photovoltaic inverter 1 to the electrical network 3, i.e., the voltage fluctuations at the output of the inverter 1 can be tolerated by the loads 6 which they power, and therefore the local loads 6 will not experience a voltage peak which could damage the loads 6 by reaching the prohibited surge region B, or a power supply cutoff by reaching the power supply cutoff region C upon reconnecting the inverter 1 to the electrical network 3.

After the reconnection, a delay time tᵣ of 20 ms is waited out during step F in which detecting that the voltage and frequency of the electrical network are outside the normal predetermined ranges is disabled to prevent false negatives due to transients.

Despite the fact that the MPPT is disabled during some steps of this process, it is important that the voltage and direct current input/output filters are working in an uninterrupted manner in order to favor a more suitable performance when the CSC mode becomes functional again.

## Claims

1. A method for disconnecting and reconnecting an inverter (1) initially connected to the electrical network (3) and working as a current source (CSC) comprising the steps of:
- step A: continuously monitoring the instantaneous voltage and frequency of the electrical network until detecting that one of said parameters is outside normal predetermined ranges;
- step C: disconnecting the inverter from the electrical network and maintaining the inverter voltage at the nominal voltage and frequency (Ug_nom,Vd_nom,Vq_nom fg_nom) of the electrical network;
- step D: continuously monitoring the instantaneous voltage and frequency of the network until detecting that their parameters are stable within said normal predetermined ranges; and
- step E: reconnecting the inverter to the electrical network;
the mentioned method further comprising a step B between steps A and C for switching the inverter so that it works as a voltage source (VSC), setting the inverter voltage (Vac,Vac_d,Vac_q) at the nominal voltage and frequency (Ug_nom,Vd_nom,Vq_nom fg_nom) of the electrical network; fixing the inverter output angle (θ) according to an internal clock (9) having a frequency equal to the nominal frequency (fg_nom) of the electrical network during step C, **characterized in that** during step A detecting that the instantaneous voltage and frequency of the electrical network are outside the normal predetermined ranges is performed by means of detecting the crossing of the inverter voltage (Uc,Uc_uv,Uc_vw) at the nominal frequency (fg_nom) with two sine waves in phase with the inverter, with nominal voltage and frequency (Ug_nom,fg_nom) and direct components, which are positive and negative, respectively, equal to the tolerance range limits.

2. The method according to the preceding claim, **characterized in that** the tolerance ranges are between 15% and 25% of the nominal peak voltage (Ug_nom*sqrt(2)) of the electrical network.

3. The method according to the preceding claim, **characterized in that** the tolerance ranges are 20% of the nominal peak voltage (Ug_nom*sqrt(2)) of the electrical network.

4. The method according to any one of the preceding claims, **characterized in that** step B comprises the sub-steps:
- step B1: determining, during a first pre-established time (t₁), whether the voltage of the electrical network (Ug,Ug_uv,Ug_vw) is above or below a predetermined threshold, setting the inverter voltage (Vac,Vac_d,Vac_q) at the nominal voltage and frequency (Ug_nom,Vd_nom,Vq_nom fg_nom) of the electrical network, and after step B1;
- step B2: during a second pre-established time (t₂), if it has been determined during step B1 that the voltage of the electrical network was below the predetermined threshold, setting the inverter voltage at the voltage of the electrical network (Ug,Ug_uv,Ug_vw) and, otherwise, maintaining the inverter voltage (Vac,Vac_d,Vac_q) at the nominal voltage and frequency (Ug_nom,Vd_nom,Vq_nom fg_nom) of the electrical network during said second pre-established time.

5. The method according to the preceding claim, **characterized in that** the predetermined threshold is 85% of the quadratic mean of the nominal network voltage (Vrmsg) in single-phase and 85% of the nominal network direct voltage (Vd_nom) in three-phase.

6. The method according to any one of the preceding claims, **characterized in that** in going from step A to step B and in going from step B to step C the inverter voltage (Vac,Vac_d,Vac_q) is maintained within a no interruption region defined by the following ranges of the nominal voltage : 80% - 100% when the transient duration is less than 10s and 90% - 100% elsewhere.

7. The method according to any one of the preceding claims, **characterized in that** step D further comprises the following sub-steps:
- step D1: keeping the inverter (1) working as a voltage source (VSC) at the nominal voltage (Ug_nom,Vd_nom,Vq_nom) and the inverter output angle (θ) according to the internal clock (9) until detecting that the voltage and frequency of the electrical network (Ug,Ug_uv,Ug_vw,fg) are within the normal predetermined ranges; and
- step D2: progressively synchronizing the inverter output angle (θ) with the electrical network angle (θ_{g}).

8. The method according to the preceding claim, **characterized in that** in going from step D1 to step D2 and in going from step D2 to step E the inverter voltage (Vac,Vac_d,Vac_q) is kept within a no interruption region defined by the following ranges of the nominal voltage: 80% - 100% when the transient duration is less than 10s and 90% - 100% elsewhere.

9. The method according to any one of the preceding claims, **characterized in that** step E includes a closing time (t_{CLOSE}) during which the progressive synchronization of the inverter output angle (θ) with the electrical network angle (θ_{g}) is maintained.

10. The method according to any one of the preceding claims, **characterized in that** the inverter (1) is a photovoltaic inverter connected to a photovoltaic power source (2).

11. An inverter (1) suitable for being connected to a direct power source (2) and to an alternating electrical network (3) with a predetermined nominal voltage and frequency (Ug_nom,fg_nom), said inverter comprising a controller (4) with means for switching said inverter for its operation as a current source (CSC) or a voltage source (VSC), and means for detecting whether the instantaneous voltage and frequency of the electrical network are within normal predetermined ranges, **characterized in that** said means for detecting whether the instantaneous voltage and frequency of the electrical network are within normal predetermined ranges are adapted to detect that one of said parameters is outside normal predetermined ranges by means of detecting the crossing of the inverter voltage (Uc,Uc_uv,Uc_vw) at the nominal frequency (fg_nom) with two sine waves in phase with the inverter, with nominal voltage and frequency (Ug_nom,fg_nom) and direct components, which are positive and negative, respectively, equal to the tolerance range limits.

12. The inverter (1) according to the preceding claim, **characterized in that** the direct power source (2) comprises at least one solar panel.

13. The inverter (1) according to any one of claims 11 or 12, **characterized in that** the controller (4) further comprises means for detecting the electrical network angle (θ_{g}) and means for setting the inverter output angle (θ).

14. An electrical system (5) comprising an inverter (1) according to any one of claims 11 to 13, said system comprising a group of loads (6) powered by said inverter and a switch (7) for connecting and disconnecting said electrical system to/from the electrical network (3).

## Patentansprüche

1. Verfahren zur Trennung und Wiederverbindung eines Wechselrichters (1), welcher zunächst an das elektrische Netzwerk (3) verbunden ist und als Stromquelle (CSC) arbeitet, umfassend folgende Schritte:
- Schritt A: kontinuierliches Überwachen der momentanen Spannung und Frequenz des elektrischen Netzwerks bis erkannt wird, dass sich einer der genannten Parameter außerhalb der normalen vorbestimmten Bereichen befindet;
- Schritt C: Trennen des Wechselrichters von dem elektrischen Netzwerk und Beibehalten der Wechselrichterspannung bei der Nennspannung und Nennfrequenz (Ug_nom,Vd_nom,Vq_nom fg_nom) des elektrischen Netzwerks;
- Schritt D: kontinuierliches Überwachen der momentanen Spannung und Frequenz des Netzwerks bis erkannt wird, dass ihre Parameter innerhalb der genannten normalen vorbestimmten Bereichen stabil sind; und
- Schritt E: Wiederverbinden des Wechselrichters an das elektrische Netzwerk;
wobei das genannte Verfahren zusätzlich einen Schritt B zwischen den Schritten A und C umfasst, um den Wechselrichter so umzuschalten, dass er als Spannungsquelle (VSC) arbeitet, wobei die Wechselrichterspannung (Vac,Vac_d,Vac_q) bei der Nennspannung und Nennfrequenz (Ug_nom,Vd_nom,Vq_nom fg_nom) des elektrischen Netzwerks eingestellt wird; wobei der Austrittswinkel (θ) des Wechselrichters gemäß einem internen Taktgeber (9) festgelegt wird, welcher eine Frequenz aufweist, die gleich der Nennfrequenz (fg_nom) des elektrischen Netzwerks während Schritt C ist, **dadurch gekennzeichnet, dass** während Schritt A, die Erkennung, dass sich die momentane Spannung und Frequenz des elektrischen Netzwerks außerhalb der normalen vorbestimmten Bereichen befindet, dadurch ausgeführt wird, indem die Kreuzung der Wechselrichterspannung (Uc,Uc_uv,Uc_vw) bei der Nennfrequenz (fg_nom) mit zwei Sinuswellen in Phase mit dem Wechselrichter erkannt wird, mit einer Nennspannung und einer Nennfrequenz (Ug_nom,fg_nom) und direkten Komponenten, welche jeweils positiv und negativ sind, gleich den Toleranzbereichgrenzen.

2. Verfahren nach dem vorhergehenden Anspruch, **dadurch gekennzeichnet, dass** sich die Toleranzbereiche zwischen 15% und 25% der Nennoberspannung (Ug_nom*sqrt(2)) des elektrischen Netzwerks befinden.

3. Verfahren nach dem vorhergehenden Anspruch, **dadurch gekennzeichnet, dass** die Toleranzbereiche 20% der Nennoberspannung (Ug_nom*sqrt(2)) des elektrischen Netzwerks betragen.

4. Verfahren nach einem der vorhergehenden Ansprüche, **dadurch gekennzeichnet, dass** Schritt B folgende Teilschritte umfasst:
- Schritt B1: Bestimmen, während einer ersten vorab festgelegten Zeit (t₁), ob sich die Spannung des elektrischen Netzwerks (Ug,Ug_uv,Ug_vw) oberhalb oder unterhalb einer vorbestimmten Schwelle befindet, wobei die Wechselrichterspannung (Vac,Vac_d,Vac_q) bei der Nennspannung und Nennfrequenz (Ug_nom,Vd_nom,Vq_nom fg_nom) des elektrischen Netzwerks, und nach Schritt B1 eingestellt wird;
- Schritt B2: während einer zweiten vorab festgelegten Zeit (t₂), ob während Schritt B1 bestimmt wurde, dass sich die Spannung des elektrischen Netzwerks unterhalb der vorbestimmten Schwelle befand, wobei die Wechselrichterspannung bei der Spannung des elektrischen Netzwerks (Ug,Ug_uv,Ug_vw) eingestellt wird und, andererseits, wobei die Wechselrichterspannung (Vac,Vac_d,Vac_q) bei der Nennspannung und Nennfrequenz (Ug_nom,Vd_nom,Vq_nom fg_nom) des elektrischen Netzwerks während der genannten zweiten vorab festgelegten Zeit beibehalten wird.

5. Verfahren nach dem vorhergehenden Anspruch, **dadurch gekennzeichnet, dass** die vorbestimmte Schwelle einphasig 85% von dem quadratischen Mittel der Nennspannung des Netzwerks (Vrmsg) und dreiphasig 85% von der Nenngleichspannung des Netzwerks (Vd_nom) beträgt.

6. Verfahren nach einem der vorhergehenden Ansprüche, **dadurch gekennzeichnet, dass** beim Übergang von Schritt A auf Schritt B und beim Übergang von Schritt B auf Schritt C die Wechselrichterspannung (Vac,Vac_d,Vac_q) innerhalb eines Bereichs ohne Unterbrechung bleibt, welcher von den folgenden Bereichen der Nennspannung definiert wird:
- 80%-100% wenn die Dauer der Transienten kleiner als 10 Sek. ist und
- 90%-100% andernfalls.

7. Verfahren nach einem der vorhergehenden Ansprüche, **dadurch gekennzeichnet, dass** Schritt D zusätzlich folgende Teilschritte umfasst:
- Schritt D1: dafür sorgen, dass der Wechselrichter (1) als Spannungsquelle (VSC) bei der Nennspannung (Ug_nom,Vd_nom,Vq_nom) und dem Austrittswinkel (θ) des Wechselrichters gemäß dem internen Taktgeber (9) arbeitet bis erkannt wird, dass sich die Spannung und Frequenz des elektrischen Netzwerks (Ug,Ug_uv,Ug_vw,fg) innerhalb der normalen vorbestimmten Bereichen befinden; und
- Schritt D2: progressives Synchronisieren des Austrittswinkels (θ) des Wechselrichters mit dem Winkel (θ_{g}) des elektrischen Netzwerks.

8. Verfahren nach dem vorhergehenden Anspruch, **dadurch gekennzeichnet, dass** beim Übergang von Schritt D1 auf Schritt D2 und beim Übergang von Schritt D2 auf Schritt E die Wechselrichterspannung (Vac,Vac_d,Vac_q) innerhalb eines Bereichs ohne Unterbrechung bleibt, welcher von den folgenden Bereichen der Nennspannung definiert wird:
- 80%-100% wenn die Dauer der Transienten kleiner als 10 Sek. ist und
- 90%-100% andernfalls.

9. Verfahren nach einem der vorhergehenden Ansprüche, **dadurch gekennzeichnet, dass** Schritt E eine Schließzeit (tCLOSE) umfasst, während der die progressive Synchronisation des Austrittswinkels (θ) des Wechselrichters mit dem Winkel (θg) des elektrischen Netzwerks beibehalten wird.

10. Verfahren nach einem der vorhergehenden Ansprüche, **dadurch gekennzeichnet, dass** der Wechselrichter (1) ein photovoltaischer Wechselrichter ist, der an einer photovoltaischen Stromquelle (2) verbunden ist.

11. Wechselrichter (1), welcher dazu geeignet ist, an eine direkte Stromquelle (2) und an ein wechselndes elektrisches Netzwerk (3) mit einer vorbestimmten Nennspannung und Nennfrequenz (Ug_nom,fg_nom) verbunden zu werden, wobei der genannte Wechselrichter einen Regler (4) umfasst mit Mitteln zum Umschalten des genannten Wechselrichters für seinen Betrieb als Stromquelle (CSC) oder Spannungsquelle (VSC), und Mitteln umfasst zum Erkennen, ob sich die momentane Spannung und Frequenz des elektrischen Netzwerks innerhalb den normalen vorbestimmten Bereichen befinden, **dadurch gekennzeichnet, dass** die genannten Mittel zum Erkennen, ob sich die momentane Spannung und Frequenz des elektrischen Netzwerks innerhalb den normalen vorbestimmten Bereichen befinden dazu angepasst sind, um zu erkennen, dass sich eines der genannten Parameter außerhalb der normalen vorbestimmten Bereichen befindet, indem die Kreuzung der Wechselrichterspannung (Uc,Uc_uv,Uc_vw) bei der Nennfrequenz (fg_nom) mit zwei Sinuswellen in Phase mit dem Wechselrichter erkannt wird, mit einer Nennspannung und einer Nennfrequenz (Ug_nom,fg_nom) und direkten Komponenten, welche jeweils positiv und negativ sind, gleich den Toleranzbereichgrenzen.

12. Wechselrichter (1) nach dem vorhergehenden Anspruch, **dadurch gekennzeichnet, dass** die direkte Stromquelle (2) zumindest einen Sonnenkollektor umfasst.

13. Wechselrichter (1) nach einem der Ansprüche 11 oder 12, **dadurch gekennzeichnet, dass** der Regler (4) zusätzlich Mittel zur Erkennung des Winkels (θg) des elektrischen Netzwerks und Mittel zur Einstellung des Austrittswinkels (θ) des Wechselrichters umfasst.

14. Elektrisches System (5) umfassend einen Wechselrichter (1) nach einem der Ansprüche 11 bis 13, wobei das genannte System eine Gruppe von Lasten (6) umfasst, welche von dem genannten Wechselrichter versorgt werden, und einen Schalter (7) umfasst, zur Verbindung und Trennung des genannten elektrischen Systems an/von dem elektrischen Netzwerk (3).

## Revendications

1. Procédé pour la déconnexion et reconnexion d'un inverseur (1) connecté initialement au réseau électrique (3) et fonctionnant comme une source de courant (CSC) comprenant les étapes de:
- étape A: surveiller en continue la tension et la fréquence instantanées du réseau électrique jusqu'à détecter que l'un desdits paramètres est en dehors des fourchettes normales prédéterminées;
- étape C: déconnecter l'inverseur du réseau électrique et maintenir la tension de l'inverseur à la tension et fréquence nominales (Ug_nom, Vd_nom, Vq_nom, fg_nom) du réseau électrique;
- étape D: surveiller en continue la tension et la fréquence instantanée du réseau jusqu'à détecter que leurs paramètres sont stables dans desdites fourchettes normales prédéterminées; et
- étape E: reconnecter l'inverseur au réseau électrique;
ledit procédé comprend en outre une étape B entre les étapes A et C pour commuter l'inverseur de façon à ce qu'il fonctionne comme une source de tension (VSC), régler la tension de l'inverseur (Vac, Vac_d, Vac_q) à la tension et fréquence nominales (Ug_nom, Vd_nom, V_nom, fg_nom) du réseau électrique; fixer l'angle de sortie de l'inverseur (θ) selon une horloge interne (9) ayant une fréquence égale à la fréquence nominale (fg_nom) du réseau électrique pendant l'étape C, **caractérisé en ce que** pendant l'étape A, la détection que la tension et la fréquence instantanées du réseau électrique sont en dehors des fourchettes normales prédéterminées est performée par des moyens de détection de la traversée de la tension de l'inverseur (Uc, Uc_uv, Uc_vw) à la fréquence nominale (fg_nom) avec deux ondes sinusoïdales en phase avec l'inverseur, avec la tension et la fréquence nominales (Ug_nom, fg_nom) et des composantes continues, qui sont positive et négative, respectivement, égales aux limites de la fourchette de tolérance.

2. Procédé selon la revendication précédente, **caractérisé en ce que** les fourchettes de tolérance sont entre 15% et 25% de la tension maximale nominale (Ug_nom*sqrt(2)) du réseau électrique.

3. Procédé selon la revendication précédente, **caractérisé en ce que** les fourchettes de tolérance sont 20% de la tension maximale nominale (Ug_nom*sqrt(2)) du réseau électrique

4. Procédé selon l'une quelconque des revendications précédentes, **caractérisé en ce que** l'étape B comprend les sous-étapes:
- étape B1: déterminer, pendant un premier temps préétabli (t₁), si la tension du réseau électrique (Ug, Ug_uv, Ug_vw) est au dessus ou en dessous d'un seuil prédéterminé, régler la tension de l'inverseur (Vac, Vac_d, Vac_q) à la tension et fréquence nominales (Ug_nom, Vd_nom, Vq_nom, fg_nom) du réseau électrique, et après l'étape B1;
- étape B2: pendant un deuxième temps préétabli (t₂), s'il a été déterminé pendant l'étape B1 que la tension du réseau électrique est en dessous du seuil prédéterminé, régler la tension de l'inverseur à la tension du réseau électrique (Ug, Ug_uv, Ug_vw) et, autrement, maintenir la tension de l'inverseur (Vac, Vac_d, Vac_q) à la tension et fréquence nominales (Ug_nom, Vd_nom, Vq_nom, fg_nom) du réseau électrique pendant ledit deuxième temps préétabli.

5. Procédé selon la revendication précédente, **caractérisé en ce que** le seuil prédéterminé est 85% de la moyenne quadratique de la tension du réseau nominale (Vrmsg) en monophasé et 85% de la tension continue du réseau nominale (Vd_nom) en triphasé.

6. Procédé selon l'une quelconque des revendications précédentes, **caractérisé en ce que** en allant de l'étape A à l'étape B et en allant de l'étape B à l'étape C la tension de l'inverseur (Vac, Vac_d, Vac_q) est maintenue dans une région non-interrompue définie par les fourchettes suivantes de la tension nominale : 80%-100% lorsque la durée de la transition est inférieure à 10s et 90%-100% ailleurs.

7. Procédé selon l'une quelconque des revendications précédentes, **caractérisé en ce que** l'étape D comprend en outre les sous-étapes suivantes:
- étape D1: continuer à faire fonctionner l'inverseur (1) comme une source de tension (VSC) à la tension nominale (Ug_nom, Vd_nom, Vq_nom) et l'angle de sortie de l'inverseur (θ) selon la horloge interne (9) jusqu'à détecter que la tension et fréquence du réseau électrique (Ug, Ug_uv, Ug_vw, fg) sont dans les fourchettes normales prédéterminées; et
- étape D2: synchroniser progressivement l'angle de sortie de l'inverseur (θ) avec l'angle du réseau électrique (θ_{g}).

8. Procédé selon la revendication précédente, **caractérisé en ce que** en allant de l'étape D1 à l'étape D2 et en allant de l'étape D2 à l'étape E la tension de l'inverseur (Vac, Vac_d, Vac_q) est maintenue dans une région non-interrompu définie par les fourchettes suivantes de la tension nominale: 80%-100% lorsque la durée de la transition est inférieure à 10s et 90%-100% ailleurs.

9. Procédé selon l'une quelconque des revendications précédentes, **caractérisé en ce que** l'étape E inclue un temps de fermeture (tfermeture) pendant lequel la synchronisation progressive de l'angle de sortie de l'inverseur (θ) avec l'angle du réseau électrique (θg) est maintenue.

10. Procédé selon l'une quelconque des revendications précédentes, **caractérisé en ce que** l'inverseur (1) est un inverseur photovoltaïque connecté à une source d'alimentation photovoltaïque (2).

11. Inverseur (1) adapté pour être connecté à une source d'alimentation continue (2) et à un réseau d'électricité alternatif (3) avec une tension et une fréquence nominales prédéterminées (Ug_nom, fg_nom), ledit inverseur comprenant un contrôleur (4) aves des moyens pour commuter ledit inverseur pour sont opération comme une source de courant (CSC) ou une source de tension (VSC), et des moyens pour détecter si la tension et la fréquence instantanées du réseau électrique sont dans des fourchettes normales prédéterminées, **caractérisé en ce que** lesdits moyens pour détecter si la tension et la fréquence instantanées du réseau électrique sont dans des fourchettes normales prédéterminées sont adaptés pour détecter que un desdits paramètres est en dehors des fourchettes normales prédéterminées par moyen de détection du passage de la tension de l'inverseur (Uc, Uc_uv, Uc_vw) à la fréquence nominale (fg_nom) avec les deux ondes sinusoïdales en phase avec l'inverseur, avec la tension et fréquence nominales (Ug_nom, fg_nom) et des composantes continues, qui sont positive et négative, respectivement, égales aux limites de la fourchette de tolérance.

12. Inverseur (1) selon la revendication précédente, **caractérisé en ce que** la source d'alimentation continue (2) comprend au moins un panneau solaire.

13. Inverseur (1) selon l'une quelconque des revendications 11 ou 12, **caractérisé en ce que** le contrôleur (4) comprend en outre des moyens pour détecter l'angle du réseau électrique (θg) et des moyens pour régler l'angle de sortie de l'inverseur (θ).

14. Système électrique (5) comprenant un inverseur (1) selon l'une quelconque des revendications 11 à 13, ledit système comprenant un groupe de charges (6) alimentées par ledit inverseur et un commutateur (7) pour connecter et déconnecter ledit système électrique au/du réseau électrique (3).
